(19) Europäisches Patentamt
European Patent Office
Office européen des brevets

(11) **EP 2 525 213 A1**

(12) **EUROPEAN PATENT APPLICATION**

(43) Date of publication:
**21.11.2012 Bulletin 2012/47**

(51) Int Cl.:
***G01N 21/65*** (2006.01)  ***G01J 3/44*** (2006.01)

(21) Application number: **11250530.0**

(22) Date of filing: **16.05.2011**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **Renishaw plc**<br>**Gloucestershire GL12 8JR (GB)** | (72) Inventor: **The designation of the inventor has not yet been filed**<br><br>(74) Representative: **Matthews, Paul**<br>**Renishaw plc**<br>**Patent Department**<br>**New Mills**<br>**Wotton-under-Edge, Gloucestershire GL12 8JR (GB)** |

(54) **Spectroscopic apparatus and methods for determining components present in a sample**

(57)    This invention concerns a spectroscopic method, apparatus for determining whether a component is present in a sample. In one aspect, the method comprises resolving a model of the spectral data separately for candidates from a set of predetermined component reference spectra, and determining whether a component is present in the sample based upon a figure of merit quantifying an effect of including the candidate reference spectrum corresponding to that component in the model.

Fig. 2

**Description**

<u>Field of the Invention</u>

This invention relates to spectroscopic apparatus and methods for determining components present in a sample. It is particularly useful in Raman spectroscopy, though it can also be used in other forms of spectroscopy, e.g. using narrow-line photoluminescence, fluorescence, cathode-luminescence, UV visible (UV Vis), nuclear magnetic resonance (NMR), mid infra-red (mid-IR) or near infra-red (NIR).

<u>Background to the Invention</u>

The Raman Effect is the inelastic scattering of light by a sample. In Raman Spectroscopy, a sample is irradiated by monochromatic laser light and the scattered light is then dispersed into a Raman spectrum by a dispersive device, such as a diffraction grating, e.g. in a monochromator, to generate a spectrum called a Raman spectrum. The Raman spectrum is detected by a detector such as a charge-coupled device (CCD). Examples of Raman spectroscopy apparatus are known from US Patents Nos. 5,442,438 and 5,510,894, which are incorporated herein by reference.
Different chemical compounds have different characteristic Raman spectra. Accordingly, the Raman effect can be used to analyse the chemical compounds present.
One such technique for analysing Raman spectra is the Direct Classical Least Squares method (DCLS). This standard technique analyses spectral data $\underline{X}$ of an unknown sample in terms of a set of, $K$, known component reference spectra $\underline{S}_k$ each having $I$ data points (both may be subject to pre-processing). Component concentrations, $C_k$, for each component reference spectrum are determined by minimising the sum of the squared deviations of the spectral data from the reconstructed model,

$$\sum_{i=1}^{I}\left[X_i - \sum_{k=1}^{K} C_k S_{ki}\right]^2$$

$$(1)$$

where i represents the spectral frequency index. This results in a series of linear equations which are solved directly by matrix inversion for the component concentrations $C_k$.
DCLS will typically produce a solution in which the calculated concentrations of all components are non-zero, even those that are not present in the sample. In general, this is due to the noise present in the spectral data and differences between the reference spectra and data, which can arise due to sample environmental conditions or drift in the spectrometer performance for example. When all components in the sample are present at high concentration, it is a simple matter of comparing the calculated component concentrations to discriminate between components which are present and those that are not. However when some components are present in trace amounts it becomes more difficult to distinguish between components that are genuinely present, and those that have low $C_k$ values due to noise etc.
It is desirable to determine which components are genuinely present in a sample, even when some of the components are present in trace amounts.

<u>Summary of the Invention</u>

According to one aspect of the invention there is provided a method of determining components present in a sample from spectral data obtained from the sample. The method may comprise resolving a model of the spectral data separately for candidates from a set of predetermined component reference spectra. The method may comprise determining whether a component is present in the sample based upon a figure of merit quantifying an effect of including the candidate reference spectrum corresponding to that component in the model.
It is believed that the invention is more effective in identifying trace components present in the sample than the standard DCLS method as described above. In particular, for distinguishing between components that are present in the sample and those that are not present, using the figure of merit based upon values of the model when resolved for one candidate reference spectrum separate from other candidate reference spectra may be more effective than comparing concentrations after the model has been resolved for the whole set of reference spectra. Once a subset of components has been identified, resolving the model for the component reference spectra of the subset, rather than all spectra, may more accurately determine concentrations of components in the sample than the standard DCLS technique.

The figure of merit may be determined in accordance with a merit function, which numerically scores a comparison between the resolved model and the spectral data. Determining that a component is present in the sample may be based upon whether the score for the candidate reference spectrum corresponding to that component meets a preset criterion. The figure of merit may be a measure of goodness of fit. Determining that a component is present in the sample may be based upon whether the inclusion of the candidate reference spectrum corresponding to that component in the model improves the measure of goodness of fit of the model to the spectral data above a preset limit.

The use of such a measure may be more effective in differentiating between trace components that are present in the sample and spurious components that are not present in the sample than the standard DCLS technique. In particular, even when resolving the model for a spurious minor component results in a significant concentration for the spurious component (relative to the concentration for a trace component), the improvement in a measure, such as goodness of fit, for that spurious component tends to be much less significant. Therefore, identifying components that are present in the sample based upon a measure such as goodness of fit, rather than a comparison of calculated concentrations, of the resolved component reference spectra may result in a more accurate solution.

A component reference spectrum may be a typical spectrum for a single chemical component or may be a typical spectrum for a group of different chemical components, such as a group of chemical components that are often found together. An advantage in using a component reference spectrum for a group of different chemical components is that it may reduce the number of fitting steps that have to be carried out relative to having separate spectra for each chemical component of the group. A component reference spectrum may also be specific to other factors, such as temperature and crystal orientation. A predetermined component reference spectrum may have been determined by spectral analysis of a material of a known chemical composition.

The method may comprise determining the components present in the sample in order of decreasing significance as determined by the figure of merit. This may be achieved through successive iterations. In each iteration, the model may be resolved separately for each candidate reference spectrum together with component reference spectra of greater significance as determined in previous iterations. For example, during each iterative step, the model is resolved separately for each candidate together with component reference spectra determined as present in the sample in a previous iteration, and it is determined whether a component is present in the sample based upon whether inclusion of the candidate reference spectrum in the model results in an improvement in the figure of merit greater than other candidate reference spectra and whether the improvement is above a preset limit. This process is repeated whilst improvements to the figure of merit remain above the preset limit. It will be understood however that component reference spectra or other spectra may be resolved before carrying out the iterative process. For example, the model may be first resolved for a background spectrum that represents features such as the contribution of the substrate that supports the sample, fluorescence and a baseline of the spectrometer. Furthermore, a user may know that certain components are present and the user may have the component reference spectra for these known components resolved before carrying out the iterative step.

In one arrangement, an iteration comprises determining whether a difference between the figure of merit for a most significant candidate reference spectra and the other candidate reference spectra is within a predefined threshold and splitting the iterative process into parallel iterations for each candidate reference spectrum that falls within the threshold, wherein for each parallel iteration the other candidate reference spectrum, rather than the most significant candidate reference spectrum, is considered as a next most significant spectrum in the order. In this way, if at a point in the iterative process a difference in the figure of merit between two or more candidate reference spectra does not merit selecting one of the candidate reference spectra over the other, the search is branched to explore all reasonable alternatives. Setting a narrow threshold will reduce processing as fewer branches will be explored, whereas setting a broad threshold will avoid dropping branches that may provide useful results. A component could then be deemed as present in the sample only if the component is determined as being present in the sample by all parallel iterations.

In an alternative arrangement, the method comprises initially resolving the model for all of the reference spectra of the set of predetermined component reference spectra and removing candidate reference spectra from the model based upon the figure of merit, for example whose inclusion improves a measure of goodness of fit below the preset limit. The removal of component reference spectra could be carried out as an iterative method, for example, the iterative step continuing until an improvement to the measure of goodness of fit is above the preset limit.

The measure of goodness of fit is a measure of a discrepancy between the spectral data and the resolved model, e.g. $\sum_{k=1}^{K} C_k \underline{S}_k$. The measure of goodness of fit may be lack of fit, R-squared, likelihood ratio test or other suitable measure. In one embodiment, the measure of goodness of fit is a lack of fit sum of squares, LoF, such as that given by:

$$LoF = \sqrt{\frac{\sum_{i=1}^{I}[X_i - \sum_{k=1}^{K} C_k S_{ki}]^2}{\sum_{i=1}^{I} X_i^2}}$$

(2)

The preset limit may be a proportional improvement in goodness of fit. For example, the proportional improvement in goodness of fit may be an improvement in goodness of fit relative to a baseline, for example a minimum or maximum goodness of fit, achievable for the spectral data and the set of predetermined reference spectra. The baseline may be a value for goodness of fit achievable for the spectral data and set of predetermined component reference spectra that is closest to a value for a perfect fit. For example, the baseline may be determined by calculating a measure of goodness of fit for the model resolved for all of the predetermined component reference spectra (as is the case in standard DCLS).

A system for carrying out the method may be arranged such that the limit for the improvement in the figure of merit/measure of goodness of fit can be set based on spectroscopy performance and/or other requirements. Increasing the limit will tend to improve specificity (freedom from false positive identifications) at the expense of sensitivity (freedom from false negative identifications). The method may comprise establishing a preset limit for a spectroscopy apparatus by obtaining spectral data for samples, wherein the components making up the samples are known, determining components of the sample using the method described above for two or more limit values and selecting a suitable limit for use in the analyses of an unknown sample based on accuracy of the solution (such as the number of false negatives or false positives). Each spectroscopy apparatus may be calibrated to determine a suitable value or range of values for the preset limit and the method may comprise setting the limit to the suitable value or a suitable value identified by the range.

The inclusion of a component reference spectrum in the model may automatically trigger the inclusion of one or more transformations and/or distortions of that component reference spectrum and/or one or more corrective spectra associated with that component reference spectrum. The inclusion of such terms can be useful to correct for components that are not adequately described by a single component reference spectrum. For example, such terms may take account of environmental and/or instrumental differences between the sample and reference spectra. The inclusion of such terms may be particularly applicable to a process where candidates are evaluated together with reference spectrum of components that have already been identified as present in the sample in light of any required distortion to those reference spectra.

Resolving the model may comprise calculating a concentration for the component (corresponding to the candidate spectrum) in the sample.

Determining that a component is present in the sample may be further based upon whether a positive concentration is calculated for the component. A negative concentration is a non-physical solution to the model and therefore, is to be avoided.

Reporting that a component is present may be further based upon whether the concentration for the component is above a predetermined (positive) minimum limit. The minimum limit may be set at a level that is deemed significant to a particular application.

The model may be a Direct Classical Least Squares analysis and the model may be resolved by minimising equation (1) above for particular reference spectra (e.g. the candidate reference spectrum plus the reference spectra of components that have already been selected).

The spectral data may be a Raman spectrum.

According to a further aspect of the invention there is provided apparatus for determining components present in a sample from spectral data obtained from the sample. The apparatus may comprise a processor arranged to:-
receive the spectral data,
retrieve a set of predetermined component reference spectra, and
resolve a model of the spectral data separately for candidates from the set of predetermined component reference spectra. The processor may be further arranged to determine whether a component is present in the sample based upon a figure of merit quantifying an effect of including the candidate reference spectrum corresponding to the component in the model

According to a yet further aspect of the invention, there is provided a data carrier having stored thereon instructions, which, when executed by a processor, cause the processor to:-
receive spectral data obtained from a sample,
retrieve a set of predetermined component reference spectra, and

resolve a model of the spectral data separately for candidate reference spectra selected from the set of predetermined component reference spectra. The instructions may cause the processor to determine whether a component is present in the sample based upon a figure of merit quantifying an effect of including that candidate reference spectrum in the model

The data carrier may be a non-transient data carrier, such as volatile memory, eg RAM, non-volatile memory, eg ROM, flash memory and data storage devices, such as hard discs, optical discs, or a transient data carrier, such as an electronic or optical signal.

According to another aspect of the invention there is provided a method of constructing a model of spectral data obtained from a sample comprising selecting one or more component reference spectrum from a set of predetermined component reference spectra based upon a figure of merit for including that candidate reference spectrum in the model.

According to a further aspect of the invention there is provided a method of indicating a likelihood that a component is present in a sample comprising resolving a model of spectral data of the sample for a set of predetermined component reference spectra, determining a figure of merit for including each component reference spectrum in the model and providing an indication of the relative likelihoods that components corresponding to the component reference spectra are present in the sample based upon the figure of merit.

The indication may be a display of the figure of merit associated with the component or alternatively, the indication may be a colour, symbol (non-textual) or the like associated with the component, for example colours red, amber and green to indicate components that are, respectively, least likely, are neither the least or most likely, and most likely to be included in the sample.

Brief Description of the Drawings

Embodiments of the invention will now be described, by example only, with reference to the accompanying drawings, in which:-

Figure 1 shows apparatus according to one embodiment of the invention;

Figure 2 is a flowchart illustrating a method according to one embodiment of the invention, and

Figure 3 is a diagrammatic representation of the splitting of an iterative process in accordance with one embodiment of the invention.

Description of Embodiments

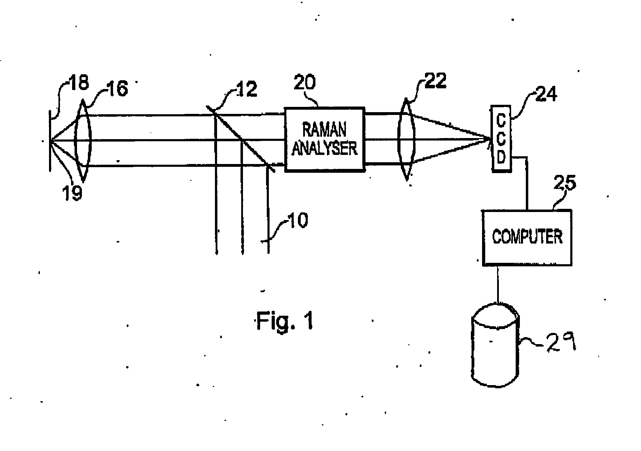

Referring to Fig. 1, apparatus according to the invention comprises a Raman spectrometer connected to a computer 25 that has access to memory 29.

The Raman spectrometer comprises an input laser beam 10 reflected through 90 degrees by a dichroic filter 12, placed at 45 degrees to the optical path. Alternatively a holographic dichroic filter may be placed at a low angle, of incidence such as 10 degrees. The laser beam then passes to an objective lens 16, which focuses it at its focal point 19 on a sample 18. Light is scattered by the sample, and is collected by the objective lens 16 and collimated into a parallel beam which passes back to the dichroic filter 12. The filter 12 rejects Rayleigh scattered light having the same frequency as the input laser beam 10, and transmits the Raman scattered light. The Raman scattered light then passes to a Raman analyser 20.

The Raman analyser 20 comprises a dispersive element such as a diffraction grating. The light from the analyser 20 is focused by a lens 22 onto a suitable photo-detector. A photo-detector array is preferred. In the present embodiment the detector 24 is a charge-coupled device (CCD), which consists of a two-dimensional array of pixels, and which is connected to a computer 25 which acquires data from each of the pixels and analyses it as required. The analyser 20 produces a spectrum having various bands as indicated by broken lines 28, spread out in a line along the CCD 24.

Samples 18 may be mounted on an XYZ stage so that spectral data may be collected from each sample under control of the computer.

The computer 25 is programmed with software code on a suitable medium, such as memory 29, comprising instructions, which when executed by a processor of computer 25 cause the computer 25 to perform the analysis routines described below. Alternatively, the data on the Raman spectrum/spectra obtained may be transferred to a separate computer having such software for this analysis. In either case, as the analysis proceeds, the values determined are stored in the computer concerned, and may be further processed and output or displayed to show results of the analysis in terms of the components in the sample/samples. In the case where the analysis is performed by computer 25, memory 29 has stored thereon a databank of component reference spectra to be used for the analysis. Each component reference spectrum is a typical Raman spectrum for a different chemical component or group of chemical components.

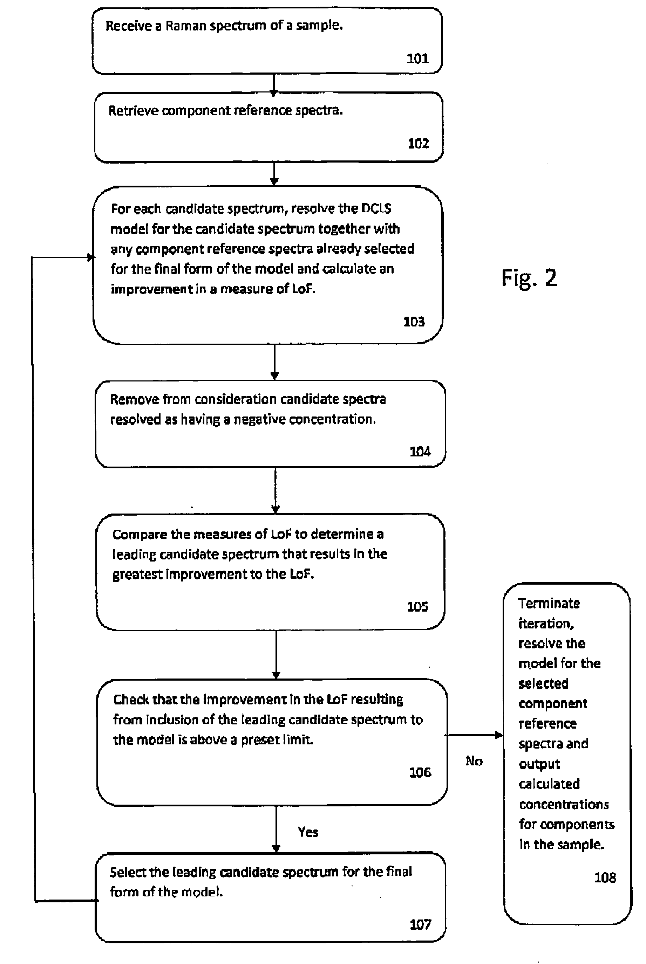

Referring to Figure 2, a method of determining components present in a sample comprises receiving 101 spectral data, in this embodiment Raman spectral data, of the sample 18. In step 102, the set of predetermined Raman reference spectra for different chemical components are retrieved, for example, from the databank in memory 29.

In this embodiment a Direct Classical Least Squares analysis is carried out of the spectral data, wherein equation (1) is resolved for each candidate spectrum of the predetermined set of component reference spectra, steps 103 to 108. A component reference spectrum is selected for inclusion in a final form of the model based upon whether the inclusion of that component reference spectrum improves a measure of goodness of fit of the model to the data above a preset limit.

An iterative process is carried out comprising selecting a component reference spectrum for inclusion in the final form of the model in each iteration in order of decreasing significance as determined by an improvement to the measure of goodness of fit.

In step 103, for each candidate of the set of predetermined component reference spectra, equation (1) is minimised for the candidate reference spectrum together with any component reference spectra that have already been selected, such as in a previous iteration. A measure of goodness of fit is calculated for the resolved components relative to the spectral data of the sample.

In this embodiment, the measure of goodness of fit is a measure of lack of fit (LoF) given by:-

$$LoF = \sqrt{\frac{\sum_{i=1}^{I}[X_i - \sum_{k=1}^{K} C_k S_{ki}]^2}{\sum_{i=1}^{I} X_i^2}}$$

This measure of lack of fit is compared to a previous measure of LoF calculated for the selected component reference spectra before the addition of the candidate reference spectrum to determine an improvement to the measure of LoF resulting from the addition.

In one embodiment, the improvement in the LoF, $L_{Ipr}$, is calculated as a proportional improvement in the LoF relative to a baseline LoF, $L_{min}$, as given by:-

$$L_{ipr} = \frac{L_{old} - L_{new}}{L_{old} - L_{min}}$$

where $L_{old}$ is the LoF value calculated for the selected component reference spectra before the inclusion of the candidate reference spectrum and $L_{new}$ is the LoF value calculated for the selected component reference spectra including the candidate reference spectrum.

In one embodiment $L_{min}$ may be set to zero. In another embodiment, the baseline, $L_{min}$, is a minimum obtainable LoF calculated from the model when resolved for all predetermined reference spectra, as in conventional DCLS. In this way, rather than calculating $L_{Ipr}$ against an absolute value of zero, $L_{min}$ is automatically adjusted to take into account data quality. As a consequence, the preset limit can be set relatively independent of data quality or pre-processing options.

In step 104, the process checks the resolved concentrations for the candidate reference spectra and removes from further consideration in the iteration (but not subsequent iterations) candidate reference spectra resolved as having a negative concentration.

In step 105, the improvements in the LoF, $L_{Ipr}$, for remaining candidate reference spectra are compared and the candidate reference spectrum associated with the greatest improvement in the LoF becomes the leading candidate reference spectrum for inclusion in the final form of the model.

A check 106 is made to determine whether the improvement in the LoF resulting from addition of the leading candidate reference spectrum is above a preset limit. If the improvement to the LoF, $L_{Irp}$, for the leading candidate reference spectrum is above the preset limit, it is selected 107 as a component reference spectrum that is present in the final form of the model. The process 103 to 107 is then repeated for the remaining unselected component reference spectra.

If the improvement to the LoF, $L_{Ipr}$, for the leading candidate reference spectrum is below the preset limit, then the method is terminated and the final form of the model, comprising the model resolved for the component reference spectra selected up to that point, is output as an electronic signal, for example to memory 29 or to a display (not shown). The final form of the model will typically comprise a subset of the set of predetermined component reference spectra, these spectra being those of most significance as measured by lack of fit.

A determination can be made of components present in the sample based upon whether the component reference spectrum corresponding to that component is included in the final form of the model. The concentrations can be determined from the resolved component $C_k$. As the component reference spectra are filtered as part of the iterative process, all reference spectra in the final form of the model may represent components present in the sample. Accordingly, further filtering to remove spurious components may not be necessary.

However, in an alternative embodiment, components having a concentration $C_k$ below a minimum limit in the final form of the model are not reported as present in the sample. The minimum limit may be set based upon the noise in the spectral data or a minimum concentration at which a component is of interest to the user.

The limit to the improvement in the LoF at which a component reference spectrum is selected for the final form of the model controls specificity and sensitivity of the technique and is likely to depend on the requirements of the application and spectroscopy performance. Accordingly, the apparatus may comprise an input for setting the limit for improvement to the LoF, such as an appropriate interface on computer 25. The Raman spectrometer may be calibrated to determine specificity and sensitivity at different limits. Such a calibration may be carried out by obtaining spectral data from samples of known components using the spectrometer, determining components of the sample using the analysis method described above for a plurality of limits and determining the proportion of false negatives and false positives at each limit. Armed with this information, a user can preset the limit used when analysing an unknown sample with the spectrometer for the specificity and sensitivity desired.

In one embodiment, the method comprises an additional step whereby the inclusion of a component reference spectrum in the final form of the model automatically triggers the inclusion of one or more transformations and/or distortions of that component reference spectrum and/or one or more corrective spectra associated with that component reference spectrum. The inclusion or such terms can be useful to correct for components that are not adequately described by a single component reference spectrum. For example, such terms may take account of environmental and/or instrumental differences between the sample and reference spectra.

In a further embodiment, the iterative process is modified to split into parallel iterations if specified criteria are met. In this embodiment, in step 105 a determination is made of whether a difference between the improvement in lack of fit for the leading candidate reference spectrum and each of the other candidate reference spectra is within a predefined threshold.

If this value for one or more of the other candidate reference spectra is within the threshold, the iterative process is branched into parallel iterations for each candidate reference spectrum that falls within the threshold. In each parallel iteration, a candidate preference spectrum that fell within the threshold is selected for the final form of this branch of the model in place of the leading candidate reference spectrum. Each branch of the iterative process including the main iteration is then progressed independently of the other branches and split again, if appropriate. Each branch is terminated when condition 106 is met, the final forms for the model from each branch are compared and components common to all branches could then be reported as present in the sample.

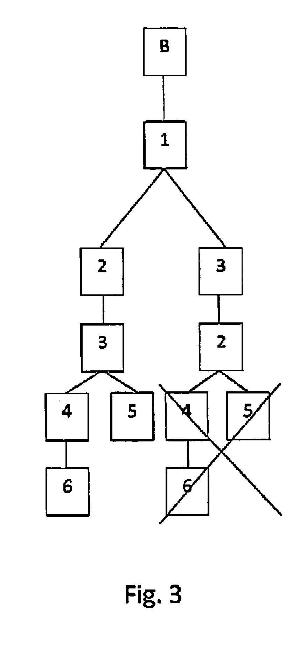

Figure 3 shows an example of how such a process may progress. In this example, first a background spectrum, B, is included in the final form of the model and then component reference spectra are successively selected fur the final form of the model in accordance with the method described above. In this example, component reference spectrum 1 is the first to be selected before the iteration is split into two parallel iterations because an improvement in LoF for reference spectrum 3 is within a threshold of the improvement in LoF achieved by leading candidate reference spectrum 2. In this example, in the next iteration, component reference spectrum 3 and 2 respectively are selected for each branch. However, in the following iteration the process is split again as preference spectrum 5 is found to fall within a threshold of improvement in the LoF set by leading candidate reference spectrum 4. However, in this example, in later iterations, reference spectra 4 and 5 are not included in the branches from which they are missing before termination Accordingly, components corresponding to reference spectra 4 and 5 are not reported as present in the sample.

Furthermore, if, as in the example, after splitting, two branches later converge with all selected reference spectra being common to both branches, it is only necessary to continue with one of the branches. This is illustrated by the cross in Figure 3.

**Claims**

1. A method of determining components present in a sample from spectral data obtained from the sample comprising:- resolving a model of the spectral data separately for candidates from a set of predetermined component reference spectra, and determining whether a component is present in the sample based upon a figure of merit quantifying an effect of including the candidate reference spectrum corresponding to that component in the model

2. A method according to claim 1, wherein the figure of merit is determined in accordance with a merit function, which numerically scores a comparison between the resolved model and the spectral data, and determination that a component is present in the sample is based upon whether the score for the candidate reference spectrum corresponding to that component meets a preset criterion.

3. A method according to claim 1 or claim 2, wherein the figure of merit is a measure of goodness of fit.

4. A method according to claim 3, comprising determining that a component is present in the sample based upon whether the inclusion of the candidate reference spectrum corresponding to that component in the model improves the measure of goodness of fit of the model to the spectral data above a preset limit and, optionally, tuning the preset limit for a desired specificity and/or sensitivity.

5. A method according to claim 4, wherein the preset limit is a proportional improvement in goodness of fit, and, optionally, wherein the proportional improvement in goodness of fit is an improvement in goodness of fit relative to a baseline goodness of fit achievable for the spectral data and the set of predetermined reference spectra and further optionally, wherein the baseline is a measure of goodness of fit obtained when all predetermined component reference spectra are included in the model

6. A method according to any one of claims 3 to 5, wherein the measure of goodness of fit is one selected from the group of lack of fit, R-squared and likelihood ratio test and, optionally, wherein the measure of goodness of fit is a lack of fit given by:

$$LoF = \sqrt{\frac{\sum_{i=1}^{I}[X_i - \sum_{k=1}^{K} C_k S_{ki}]^2}{\sum_{i=1}^{I} X_i^2}}$$

where $\underline{X}$ is the spectral data, $\underline{S}_k$ is a set of $K$ component reference spectra for which the model is resolved, each having $I$ data points, $C_k$ is the concentration for the $k$th component reference spectra and $i$ the spectral frequency index.

7. A method according to any one of the preceding claims, comprising an iterative process wherein components are determined as present in the sample in an order of decreasing significance as determined by the figure of merit and, in each iteration, the model is resolved separately for each candidate reference spectrum together with component reference spectra of greater significance as determined in previous iterations and, optionally, during each iteration, determining whether the component is present in the sample based upon whether the inclusion of the candidate reference spectrum corresponding to that component in the model results in an improvement in the figure of merit greater than other candidate reference spectra considered during that iteration and whether the improvement meets a preset criterion, and further optionally. wherein the iterative process is repeated whilst improvements to the figure of merit meet the preset criterion.

8. A method according to any one of claims 7, wherein an iteration comprises determining whether a difference between the figure of merit for a most significant candidate reference spectra and the other candidate reference spectra is within a predefined threshold and splitting the iterative process into parallel iterations for each candidate reference spectrum that falls within the threshold, wherein for each parallel iteration the other candidate reference spectrum, rather than the most significant candidate spectrum, is considered as a next most significant spectrum in the order, and optionally, wherein determining that the component is present in the sample is based upon whether the component is determined as being present in the sample by all parallel iterations.

9. A method according to any one of claims 1 to 6, comprising initially resolving the model for all of the reference spectra of the set of predetermined component reference spectra and removing candidate reference spectra from the model whose inclusion fails to satisfy the figure of merit criterion.

10. A method according to any one of the preceding claims, wherein the inclusion of a component reference spectrum the model automatically triggers the inclusion of one or more transformations and/or distortions of that component reference spectrum and/or one or more corrective spectra associated with that component reference spectrum.

11. A method according to any one of the preceding claims, wherein resolving the model comprises calculating a concentration of the component in the sample and determining that the component is present in the sample is based upon whether a positive concentration is calculated for the component.

**12.** A method according to any one of the preceding claims, wherein resolving the model comprises calculating a concentration of the component in the sample and the method further comprising reporting that the component is present in the sample based upon whether the concentration for the component is above a predetermined minimum limit.

**13.** A method according to any one of the preceding claims, wherein the spectral data is a Raman spectrum.

**14.** Apparatus for determining components present in a sample from a spectral data obtained from the sample, the apparatus comprising a processor arranged to:-
receive the spectral data,
retrieve a set of predetermined component reference spectra,
resolve a model of the spectral data separately for candidates from the set of predetermined component reference spectra, and
determine whether a component is present in the sample based upon a figure of merit quantifying an effect of including the candidate reference spectrum corresponding to that component in the model.

**15.** A data carrier having stored thereon instructions, which, when executed by a processor, cause the processor to:-
receive spectral data obtained from a sample,
retrieve a set of predetermined component reference spectra,
resolve a model of the spectral data separately for candidates from the set of predetermined component reference spectra, and
determine whether a component is present in the sample based upon a figure of merit quantifying an effect of including the candidate reference spectrum corresponding to that component in the model.

**16.** A method of constructing a model of spectral data obtained from a sample comprising:-
selecting, for resolution of the model, one or more component reference spectrum from a set of predetermined component reference spectra based upon a figure of merit for including that candidate reference spectrum in the model and, optionally, resolving the model for the selected component reference spectra.

**17.** A method according to any one of claims 1 to 13 and 16, wherein the model comprises a Direct Classical Least Squares analysis.

**18.** A method of indicating a likelihood that a component is present in a sample comprising resolving a model of spectral data obtained from the sample for a set of predetermined component reference spectra, determining a figure of merit for including each component reference spectrum in the model and providing an indication of the relative likelihoods that components corresponding to the component reference spectra are present in the sample based upon the figure of merit.

Fig. 1

Receive a Raman spectrum of a sample.

101

Retrieve component reference spectra.

102

For each candidate spectrum, resolve the DCLS model for the candidate spectrum together with any component reference spectra already selected for the final form of the model and calculate an improvement in a measure of LoF.

103

Remove from consideration candidate spectra resolved as having a negative concentration.

104

Compare the measures of LoF to determine a leading candidate spectrum that results in the greatest improvement to the LoF.

105

Check that the improvement in the LoF resulting from inclusion of the leading candidate spectrum to the model is above a preset limit.

106

No

Yes

Select the leading candidate spectrum for the final form of the model.

107

Terminate iteration, resolve the model for the selected component reference spectra and output calculated concentrations for components in the sample.

108

Fig. 2

Fig. 3

Europäisches
Patentamt

European
Patent Office

Office européen
des brevets

# EUROPEAN SEARCH REPORT

Application Number

EP 11 25 0530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/144664 A1 (RENISHAW PLC [GB]; CAPPEL UTE [DE]) 21 December 2007 (2007-12-21) * page 6, line 20 - page 7, line 2 * * page 8, line 24 - last line; figure 10 * * page 9, line 27 - page 13, line 11 * ----- | 1-18 | INV. G01N21/65 G01J3/44 |
| X | US 2011/045598 A1 (BUSCH KENNETH W [US] ET AL) 24 February 2011 (2011-02-24) * paragraph [0017] - paragraph [0026] * * paragraph [0054] - paragraph [0061] * ----- | 1-18 | |
| X | Patrick J. Cutler ET AL: "Methods for Kinetic Modeling of Temporally Resolved Hyperspectral Confocal Fluorescence Images", Applied spectroscopy, 1 February 2009 (2009-02-01), pages 153-163, XP55007632, Retrieved from the Internet: URL:http://www.opticsinfobase.org/DirectPDFAccess/42473870-BE38-C4E7-1C77C7DE4A866EC9_176593.pdf?da=1&id=176593&seq=0&mobile=no [retrieved on 2011-09-20] * page 158, column 1 - page 160, column 1, line 2 * ----- | 1-12, 14-18 | |

| | | | TECHNICAL FIELDS SEARCHED (IPC) |
|---|---|---|---|
| | | | G01J G01N |

The present search report has been drawn up for all claims

| Place of search | Date of completion of the search | Examiner |
|---|---|---|
| Munich | 21 September 2011 | Consalvo, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 11 25 0530

This annex lists the patent family members relating to the patent documents cited in the above-mentioned European search report.
The members are as contained in the European Patent Office EDP file on
The European Patent Office is in no way liable for these particulars which are merely given for the purpose of information.

21-09-2011

| Patent document cited in search report | | Publication date | Patent family member(s) | | Publication date |
|---|---|---|---|---|---|
| WO 2007144664 | A1 | 21-12-2007 | CN | 101473201 A | 01-07-2009 |
| | | | EP | 2035793 A1 | 18-03-2009 |
| | | | JP | 2009540322 A | 19-11-2009 |
| | | | KR | 20090032076 A | 31-03-2009 |
| | | | RU | 2009101109 A | 27-07-2010 |
| | | | US | 2010027003 A1 | 04-02-2010 |
| US 2011045598 | A1 | 24-02-2011 | WO | 2009051784 A1 | 23-04-2009 |

EPO FORM P0459

For more details about this annex : see Official Journal of the European Patent Office, No. 12/82

**EP 2 525 213 A1**

## REFERENCES CITED IN THE DESCRIPTION

### Patent documents cited in the description

- US 5442438 A
- US 5510894 A